# EUROPEAN PATENT SPECIFICATION

(11) **EP 3 087 312 B1**
(45) Date of publication and mention of the grant of the patent: **11.09.2024**
(21) Application number: 14819007.7
(22) Date of filing: 22.12.2014
(51) Int. Cl.: F21V 9/06, G02B 5/22, G02B 5/28, G02B 27/01

(54) **HEAD-MOUNTED DISPLAY WITH FILTER FUNCTION**
KOPFMONTIERTE ANZEIGE MIT FILTERFUNKTION
VISIOCASQUE AVEC FONCTION DE FILTRE

(30) Priority: 23.12.2013 EP 13306849
(43) Date of publication of application: 02.11.2016
(73) Proprietor: Essilor International, 94220 Charenton-le-Pont (FR)
(72) Inventor: BITEAU, John, F-94220 Charenton (FR); ZHANG, Xiaohong, F-94220 Charenton (FR); ZHENG, Haipeng, F-94220 Charenton (FR); BARRAU, Coralie, F-94220 Charenton (FR); CALLIER, Benoit, F-94220 Charenton (FR)
(74) Representative: Plasseraud IP
(86) International application number: PCT/EP2014/079026
(87) International publication number: WO 2015/097169

(56) References cited:
- EP-A1- 2 085 798
- WO-A1-02/056091
- WO-A1-2013/150752
- WO-A1-2013/171434
- WO-A2-2008/099116
- US-A1- 2008 018 641
- US-A1- 2008 186 448
- US-A1- 2008 273 246

## Description

### Technical field

The present invention relates to the technical field of head-mounted displays. More particularly, the present invention relates to the technical field of head-mounted displays comprising an optical module containing an image source and an imager for guiding light emitted by the image source to a wearer's eye in operation.

### Background of the invention

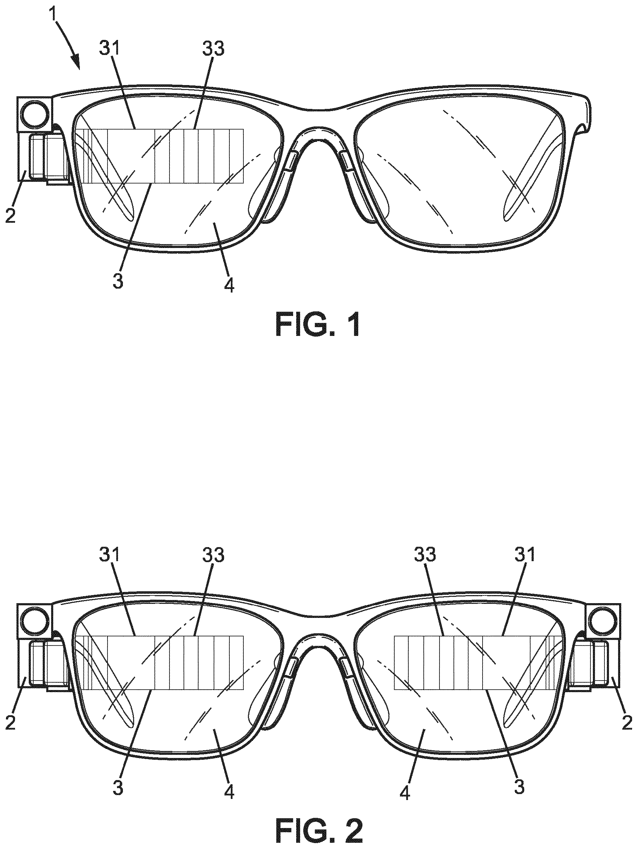

A head-mounted display (HMD) is a displaying apparatus to be worn on the head in order to have information content directly displayed in front of one (monocular HMD - FIG. 1) or each eye (binocular HMD - FIG. 2). HMDs are also known as near-to-eye displays.

HMD can take various forms, including eyeglasses, visors, helmets, masks and goggles.

Generally, an HMD comprises an optical module with an image source that generates light beams from an electronic signal, the image source being generally of the miniature screen, laser diode, light-emitting diode type, organic light-emitting diodes or spatial light modulators. The HMD also comprises an imager for shaping light beams coming from the optical module and for directing light beams towards the wearer's eye to enable the visualisation of information content.

HMDs may be immersive or non-immersive (the latter with see-through or see-around mechanisms) HMDs. Immersive HMDs comprise non-transparent imager that obstructs the wearer's total field of view. See-around HMDs comprise non-transparent imager that partially obstructs the wearer's field of view. See-through HMDs comprise transparent imager that presents no obstruction of the wearer's field of view.

With respect to non-immersive HMDs, two light paths lead to the wearer's retina: the display image path taken by light beams emitted by an optical module of the HMDs and the scene image path taken by light beams coming from the environment of the wearer.

Thus, the wearer's eye receives artificial light, the spectrum of which differs from that of natural light.

The human eye can see wavelengths within a range of about 380 nm to about 780 nm. Beyond this visible light spectrum, some wavelengths induce acute or cumulative photo-damage to the eye. Particularly, the ultraviolet radiations, such as UVA (ultraviolet radiations within a range of 315 nm to 380 nm) and UVB (ultraviolet radiations within a range of 280 nm and 315 nm), are harmful for the cornea and the crystalline lens of the human eye and are incriminated in cataracts. Among the visible wavelengths, the high-energy visible light comprised between 380 nm and 500 nm (blue light) induces cumulative damage to the retina of the human eye, and particularly the blue-violet light comprised between 415 nm and 455 nm.

Recent epidemiological analyses evidence that blue light is an environmental factor in the pathogenesis of age-related macular degeneration (AMD), like smoking or nutritional antioxidant deficiencies (Cruickshanks et al., 2001, in Arch. Ophthalmol.; Taylor et al., 1992, in Arch. Ophthalmol.; Young, 1992, in J. Natl Med. Assoc.; Mitchell and Wang, 1998, in Ophthalmology; Fletcher et al., 2008, in Arch Ophthalmol; Butt et al., 2011, in Ophthalmology; and Vojnikovic et al., 2010, in Coll. Antropol.).

For example, the EUREYE study found that there is significant correlation between blue light exposure and neovascular AMD in individuals having the lowest antioxidant level (Fletcher et al., 2008, in Arch. Ophthalmol.). Another study performed on 838 watermen of the Chesapeake Bay showed that patients with advanced AMD had significantly higher exposure to blue or visible light over the preceding 20 years (Taylor et al., 1992, in Arch. Ophthalmol.). Finally, a recent meta-analysis of the epidemiological literature concluded in a significantly increased risk of AMD for individuals with more sunlight (which contains blue light) exposure (Sui et al., 2013, in Br. J. Ophthalmol.).

The toxic effects of blue light on the retina have been demonstrated experimentally on numerous cellular (Sparrow et al., 2002 in IOVS; Youn et al., 2009 in J Photochem Photobiol B) and animal (Putting et al., 1994 in Exp Eye Res) models of degenerative retinal pathologies. Recently, the precise phototoxic action spectrum of blue light has been identified on an *in vitro* AMD model in physiological lighting conditions (Arnault et al., 2013 in PlosOne). Among blue wavelengths, this is the 40 nm spectral band comprised between 415 nm and 455 nm, the blue-violet light, which brings the highest phototoxic risk for the retina.

The image source of an HMD, particularly one with fluorescent lamps or white light-emitting diodes (LEDs), may present an emission spectrum with a large proportion of undesired light, which may be cumulatively harmful to the wearer's eye, additionally with the natural light exposure, i.e. light from the wearer's environment. Indeed, it is difficult to provide lighting element emitting light with a desired spectrum, it becomes a challenge to provide lighting element without photonic noise. For instance, some fluorescent lamps may contain about 26 % blue light (i.e. 26 % of the visible emission of the fluorescent lamp are in the blue range), and cool white LEDs, with colour temperature higher than or equal to 6000 K, may contain up to 35 % blue light, whereas traditional incandescent lamps, with low colour temperature (about 2700 K), only contain less than 5% blue light. Now, leaders in the lighting industry believe that over 90 % of all light sources worldwide will be based on solid state lighting - i.e. lighting using LEDs, OLEDs (organic light-emitting diodes) or PLED (polymer light-emitting diodes) - by 2020, including HMDs. Conventional devices are known from documents WO 02/056091, US 2008/018641, WO 2008/099116, US 2008/186448, WO 2013/171434, EP 2 085 798, WO 2013/150752 and US 2008/273246.

Thus, there is a need to provide HMDs that are safer for to the wearer's eye.

Furthermore, in an HMD, the image source is close to the wearer's eye. The obtained image that is reflected towards the wearer's eye may have different properties than in the case it is projected towards a wall or emitted from a screen. Thus, image distortions different from those encountered in image projection or emission may be detrimental to the image quality as received or perceived by the wearer's eye.

Thus, there is also a need to improve image quality in HMDs.

### Summary of the invention

Accordingly, the present invention aims at overcoming at least one technical problem of the prior art as mentioned above. In particular, one aim of the invention is to provide an HMD with harmless light emission. Another aim of the invention is to provide an HMD with improved image quality.

To these aims, the present invention provides an ophthalmic lens according to claim 1.

The present invention also provides a head-mounted display according to claim 2

Such a conception of the HMD makes it possible to obtain images reflected towards the wearer's eye with controlled properties, and in particular with balanced spectrum.

The imager may comprise a light guide for guiding a polarized light in operation, and the light filter may be applied on the light guide. The imager may contain a (polarising) beam splitter, and the light filter is applied on the beam splitter.

The imager may further comprise an insulation layer on the light guide, and the light filter is applied on the insulation layer.

The imager may further comprise an extraction surface applied on a portion of the light guide facing the wearer's eye in operation, and the light filter is applied on the extraction surface.

The HMD may further comprise an ophthalmic lens with a front face, a rear face and optionally containing an image insertion area optically linked to the image source, the ophthalmic lens comprising the imager. The light filter is applied on at least one of the image insertion area, and the rear face of the ophthalmic lens.

The light filter may comprise an interferential filter selected from at least a Bragg mirror based filter, a multilayer dielectric filter, a holographic device, and a Rugate filter. The interferential filter may further comprise a photonic bandgap material. When the interferential filter is one of a Bragg mirror based filter, a multilayer dielectric filter and a Rugate filter, the interferential filter may comprise a multilayer dielectric stack of alternating layers of one material having high refractive index of 1.9 to 2.6, and one material having low refractive index of 1.2 to 1.8, each layer being 5 nm to 420 nm, and the total thickness of the multilayer dielectric stack being 1150 nm to 5770 nm.

The light filter comprises at least one absorptive filter including at least a dye and/or pigment absorbing wavelengths within a range of 400 nm to 455 nm, and transmitting at least 85 % of wavelengths from 500 nm to 780 nm. The absorptive filter may further comprise an optical brightener.

Alternatively or additionally, the absorptive filter is applied on at least one functional layer. The functional layer being selected from an impact-resistant/adhesion primer layer, an abrasion-resistant/scratch-resistant layer, an antireflective layer, an antistatic layer, an anti-soiling layer, an antifogging layer, a self-healing polarisation layer, a tint layer, a photochromic, and combinations thereof.

The dye and/or pigment may include at least one component chosen from the group consisting of: Auramine O; Coumarin 6; Coumarin 343; Coumarin 314; Nitrobenzoxadiazole; Lucifer yellow CH; Perylene; 9,10 Bis(phenylethynyl)anthracene (BPEA); Proflavin; 4-(Dicyanomethylene)-2-methyl-6-(4-dimethylaminostyryl)-4H-pyran; 2-[4-(Dimethylamino)styryl]-1-methypyridinium iodide; Resorufin methyl ether; Acridine; Lutein; Zeaxanthin; and mixtures thereof.

The at least a dye and/or pigment may be dispersed in a thermoplastic or thermoset polymer material, and/or dispersed in an ophthalmic lens bulk material and/or in an adhesive material.

### Brief description of the drawings

Other aims, features and advantages will be described hereafter in reference to the accompanying exemplary and non-limiting drawings. In the drawings like numeral references denote similar components or steps throughout the views:
- FIG. 1 is an illustration of a monocular head-mounted display;
- FIG. 2 is an illustration of a binocular head-mounted display;
- FIG. 3 is a schematic illustration of a head-mounted display of the invention, wherein the imager is encapsulated inside the ophthalmic lens;
- FIG. 4 is a schematic illustration of a head-mounted display not according to the claimed invention, wherein the imager is positioned at the front face of the ophthalmic lens;
- FIG. 5 is a schematic illustration of a head-mounted display not according to the claimed invention, wherein the imager is positioned at the rear face of the ophthalmic lens;
- FIG. 6 is a magnified detail of FIG. 3;
- FIG. 7 is a graph illustrating the refractive index variation within a Bragg mirror based filter;
- FIG. 8 is a graph illustrating the refractive index variation within a Rugate filter;
- FIG. 9 is a graph showing the reflectance spectrum at normal incidence of the interferential filter of a first particular embodiment of the invention, the interferential filter being applied on a 1.6 refractive index material (MR8^{™}, Mitsui) and air as the incidence medium;
- FIG. 10 is a graph showing the reflectance spectrum at 45° incidence of a polarising beam splitter composed of alternating layers of ZrO₂ and SiO₂ (6 layers each), the polarising beam splitter being applied on a polymer material (MR8^{™}, Mitsui), the incidence and emergence medium being the polymer material;
- FIG. 11 is a graph showing the reflectance spectrum at 45° incidence of a modified the polarising beam splitter with filter function, composed of alternating layers of ZrO₂ and SiO₂ (6 layers each) (second particular embodiment), the polarising beam splitter being applied on a polymer material (MR8^{™}, Mitsui), the incidence and emergence medium being the polymer material;
- FIG. 12 is a graph showing the reflectance spectrum (0° incidence for overall mean polarised beam, 62° incidence for S-polarised beam having passed through a polarising beam splitter) of an interferential filter according to a third particular embodiment, the interferential filter being encapsulated inside a polymer material (MR8^{™}, Mitsui)°;
- FIG. 13 is a graph showing the reflectance spectrum at normal incidence (0° incidence for overall mean polarised beam, 62° incidence for S-polarised beam having passed through a polarising beam splitter) of an interferential filter according to a fourth particular embodiment, the interferential filter being encapsulated inside a polymer material (MR8^{™}, Mitsui);
- FIG. 14 is a graph showing the variation of reflectance as a function of incidence angle for wavelengths 460 nm (mean polarisation) and 550 nm (S-polarised beam having passed through a polarising beam splitter) for the interferential filter according to the fourth particular embodiment;
- FIG. 15 is a graph showing the reflectance spectrum of an interferential filter according to a fifth particular embodiment of the invention, at high incidence angle of 62° and for S-polarised beam coupled to the light guide on which the interferential filter is applied, the beam having passed through a polarising beam splitter; and
- FIG. 16 is a graph showing the reflectance spectrum of an interferential filter according to a sixth particular embodiment of the invention, at normal incidence, the interferential filter being applied on a polymer material (MR8^{™}, Mitsui), the incidence medium is the polymer material and the emergence medium is air.

### Detailed description of preferred embodiments

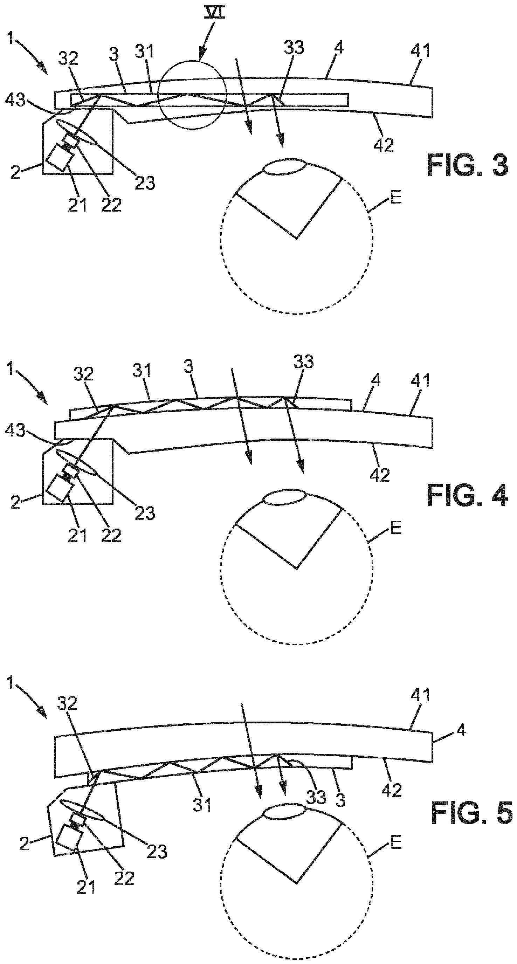

Referring now to FIG. 1 to 6, a head-mounted display (HMD) according to particular embodiments of the invention will be described.

Any percentage of light given in this description should be understood as indicating a portion of light energy against the total energy of the light in question.

Such an HMD 1 comprises an optical module 2 containing an image source 21, an imager 3 for guiding light emitted by the image source 21 to a wearer's eye E in operation, and at least one light filter for filtering a portion of light emitted by the image source 21. The light filter may be placed anywhere in the optical path of the light (coming from the image source) between the image source and the wearer's eye E.

The light filter is particularly conceived to guarantee the quality of the image perceived by the wearer. Advantageously, the light filter is conceived so that the same level of image quality as or as closed as possible to that of the image without filter function is obtained (little to no distortion). The following parameters may help to evaluate the level of distortion: colour gamut, colour respect, contrast/brilliance, sharpness, homogeneity of the brightness, colour uniformity, chromaticism, reflection, and transparency.

Advantageously, the light filter filters wavelengths emitted by the image source within a range of 280 nm to 610 nm.

Within the scope of the invention, the verb "to filter" means "to filter out partially or totally". Within the scope of the invention, wording "to filter wavelengths/light within a range of A to B" means "to filter out one or more wavelengths (such as a band) lying within the range of A to B". It can also mean "to filter out the whole wavelength range of A to B".

The light filter may filter light such as UV (including only one or more sub-ranges like UVA and UVB), blue light and infrared radiation (IR). The light filter may also filter other visible wavelength as needed by specific conditions of the wearer's eyes or for specific characteristics of the light source. UV comprises wavelength within a range of 280 nm to 380 nm and can be subdivided into UVA containing wavelengths within a range of 315 nm to 380 nm and UVB containing wavelengths within a range of 280 nm to 315 nm. Blue light comprises wavelengths within a range of 380 nm to 500 nm, preferably 380 nm to 455 nm. A particular bandwidth of blue light is the range of 415 nm to 455 nm corresponding to noxious blue-violet light; the light filter may advantageously selectively filters this range of wavelengths. Near IR comprises wavelength over 780 nm to 1400 nm. The light filter may generally filter noxious light containing wavelengths of at least one of UV, noxious blue light and IR.

Alternatively, the light filter may filter at least one particular bandwidth to improve image quality. For example, the light filter filters at wavelength of around 580 nm to improve contrast perception of the image. This may also prevent dazzle. Filtering noxious blue light can also increase the contrast sensitivity and the visual comfort of the wearer, by reducing glare.

The optical module **2** guides and processes a source of image into the imager **3** and comprises the image source **21,** and usually at least a display **22** and optics elements **23** such as lens arrangements and/or collimator. Optionally, the optical **module 2** may also comprise a (polarising) beam splitter (not shown) when it is not provided in the imager **3.**

The imager **3** may comprise further comprises at least one of a (polarising) beam splitter **32,** an extraction surface **33** on a portion of the light guide **31** facing the wearer's eye **E** in operation and an insulation layer **34** on the light guide **31.**

More particularly, the light filter is applied on at least one of the image source **21** (and more generally any element of the optical module **2**), the light guide **31**, the (polarising) beam splitter **32,** the extraction surface **33,** and the insulation layer **34.**

The application of the light filter should be understood within the scope of the present invention to mean that the light filter is added to a surface of the element part, to a surface of one component constituting the element, within the element or that the element has been modified to present a filter function in addition to its original function(s).

If the light filter is applied on the image source **21,** it is thus possible to filter the light emitted by the image source **21,** for example to get rid of noxious light and/or to improve the image quality. Thus, there is no need to change any characteristics of other elements of the HMD. Hence, this spares the burden to alter an already complex fabrication process of the HMD.

The light guide **31** guides the light emitted by the image source up to the wearer's eye **E** without substantial information loss. Applying the light filter on the light guide **31,** especially on at least part of the surface thereof or incorporated inside the light guide **31,** makes it possible to apply different filtering levels between the display image path and the scene image path.

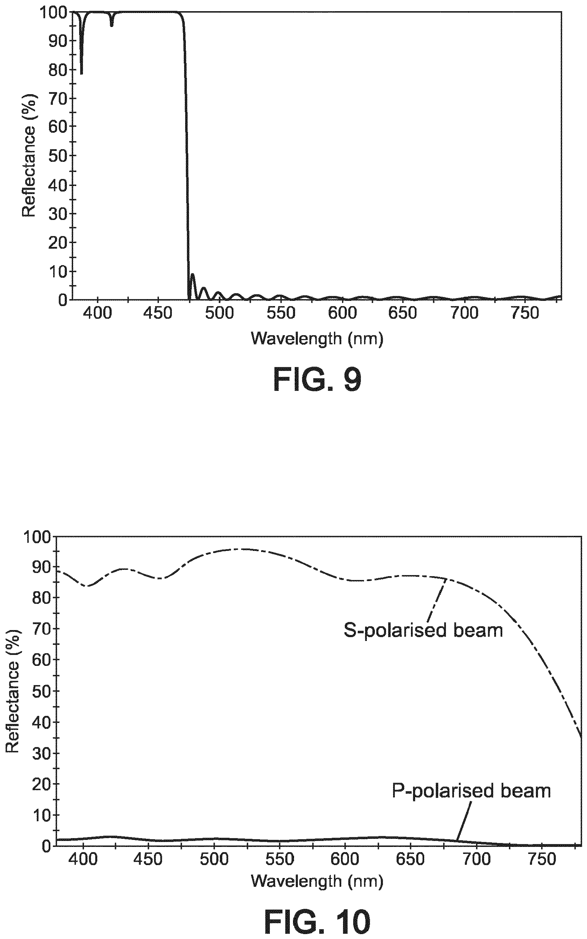

A polarising beam splitter **32** splits an incident light (coming from the image source) into S-polarised and P-polarised light beams. Only the S-polarised (respectively P-polarised) light beam is selectively reflected into the light guide **31** to form the image received by the wearer's eye **E** in operation. P-polarised (respectively S-polarised) light beam is transmitted through the polarising beam splitter **32.** One example of a polarising beam splitter is given in US6891673 and is composed of alternating layers of ZrO₂ and SiO₂ (6 layers each). Each layer of this particular polarising beam splitter is 50 nm to 170 nm thick, the total thickness being around 1285 nm. This particular polarising beam splitter typically transmits an average of 98 % of the P-polarised light beam and reflects on average over 90 % of S-polarised light beam towards the light guide (FIG. 10). The splitting function is applied to the entire visible spectrum from 380 nm to 780 nm. Applying the light filter on the polarising beam splitter **32** makes it possible to select the wavelengths to be reflected towards the light guide **31.**

While a light guide **31** guides light by internal reflection (as if the light is trapped inside the light guide), an extraction surface **33** applied in one region of the light guide **31** makes it possible for the light to be transmitted through the superposition of light guide **31** and extraction surface **33,** generally towards the wearer's eye **E** in operation (as if the light is freed from the light guide), thus ensuring a coupling-out function. Applying the light filter on the extraction surface **33** makes it possible to select the wavelengths to be extracted and to travel towards the wearer's eye **E.**

An insulation layer **34** is a layer of the imager **3** usually placed in contact with a transparent or partially transparent substrate supporting the light guide **31.** The insulation layer **34** may be applied on the front side of the light guide **31** (i.e. side of the light guide further from the wearer's eye in operation), the rear side of the light guide **31** (i.e. side of the light guide closer to the wearer's eye in operation) or both. When specifying that the light filter may be applied on the insulation layer **34,** this also comprises the embodiments in which the light filter is applied between the insulation layer **34** and the light guide **31** of the imager **3.** The insulation layer **34** is used in order to keep the optical properties of the light guide **31** once coupled to the substrate (particularly the bulk of an ophthalmic lens). The insulation layer **34** makes it possible to reflect selectively light within a determined range of incidence angles and to transmit light outside this determined range of incident angles.

An example of such an insulation layer is described in WO 2008/099116. In an advantageous case, applying the light filter on the insulation layer **34,** particularly as an insulation layer modified to add an interferential filter function as described below, at the front side of the light guide **31,** usually in HMDs of the see-through type, enables the non-desired wavelengths to be selectively transmitted out of the light guide **31,** in the opposite direction of the wearer's eye. The light filter when applied on an insulation layer **34** by modifying the design of the latter provide a filter function for filtering light reflected inside the light guide **31** (i.e. image from the image source) and light coming from the wearer's environment. The multiple reflections inside the light guide **31** ensure a high efficiency for the filter function. The light filter can also be placed between the light guide **31** and the insulation layer **34.** In this case this absorptive filter is generally located at the front side, the rear side or on both sides of the light guide **31** in order to maximize the filtering effect.

Additionally to what have been said here, if a beam splitter is provided, applying the light filter on one of the extraction surface, the insulation layer or more generally on any element crossed by the light emitted by the image source after a beam splitter makes it possible to apply the filter function only to the S-polarised beam. In such case, if the light filter is provided as an interferential filter as will be described hereafter, the structure thereof can be more easily optimised since the filter function does not need to be designed for both S- and P-polarised beams but only for the S-polarised beam.

The HMD **1** may further comprise an ophthalmic lens **4,** notably with a front face **41,** a rear face **42** and optionally an image insertion area **43** optically linked to the image source **21,** the ophthalmic lens **4** comprising the imager **3.** The front and rear faces **41, 42** are designated with respect to the normal operation of the HMD, i.e. the front face **41** corresponds to the face of the ophthalmic lens **4** farther from the wearer's eye **E** and the rear face **42** is the face of the ophthalmic lens **4** closer to the wearer's eye **E** in operation. The ophthalmic lens **4** should be understood in the context of the present invention as designating as lens whose function is to protect the eye and / or to correct vision; this lens is selected from the afocal, unifocal, bifocal, trifocal, and progressive lens. Then, it is understood that the ophthalmic lens may be a corrective or a non-corrective ophthalmic lens. If the ophthalmic lens **4** is corrective, it can provide correction in a see-through HMD for both the display image path and the scene image path if the imager is placed at the front face of the ophthalmic lens and to a lesser extent since the imager is encapsulated within the ophthalmic lens (different corrections are provided for both paths). The ophthalmic lens **4** may be a passive system or an active system. By passive system it is understood that the ophthalmic lens **4** presents at least a function which cannot be modified or changed (like anti-choc, anti-abrasive, antireflective functions, etc.). By active system, it is understood that the ophthalmic lens **4** presents at least a function that can be modified or changed by an external stimulation such as energy, actinic radiation, heating, etc. The latter type of ophthalmic lens is for example a photochromic lens, which is able to modify its tint in the presence of UV or actinic light or an electrochromic lens, which is able to modify its tint by electrical stimuli.

The light guide **31** is encapsulated within the ophthalmic lens **4.** The light filter **31** is applied on the image insertion area **43,** and optionally on at least one of the front face **41** and the rear face **42** of the ophthalmic lens **4** alternatively or additionally to at least one of the light guide **31,** the polarising beam splitter **32,** the extraction surface **33,** and the insulation layer **34.** The light filter may also be applied to an adhesive layer between the light **guide31** and the ophthalmic lens **4.**

In general, the location of the light filter in one of the mentioned elements of the HMD depends on the desired effect to provide to the image received by the wearer's eye **E.**

The image insertion area **43** is a region of the ophthalmic lens **4** where images emitted from the image source **21** enter the material thereof, to reach the light guide **31** placed either on the front face **41** of the ophthalmic lens or encapsulated therein, thus ensuring a coupling-in function.

In this particular case, the insulation layer **34** is between the light guide **31** and the ophthalmic lens **4** partially used as a support for the light guide **31.**

The light filter is obtained through the absorptive filter, and optionally further through a reflective filter such as an interferential filter, as illustrated in the embodiments described below.

The light filter may comprise an interferential filter comprising a plurality of deposited layers made of materials having different refractive indexes to obtain filtering functionalities among at least a Bragg mirror based filter, a multilayer dielectric filter and a Rugate filter.

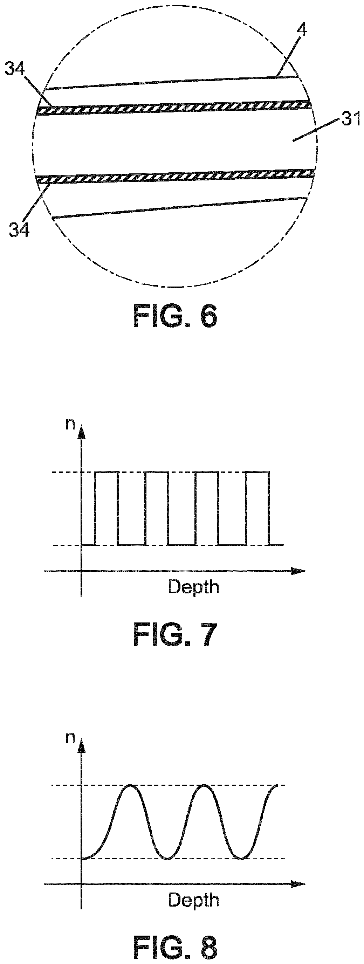

A Bragg mirror based filter and a Rugate filter are filters composed of a stack of layers made of materials having different refractive indexes. The change in refractive indexes between the layers in a Bragg mirror is clear-cut (FIG. 7), whereas in a Rugate filter it is continuous and smooth (FIG. 8). Usually, the refractive index inside a Rugate filter oscillates between two extremes, for example in a sinusoidal manner. Rugate filters are known to have very well defined stop-bands for wavelength blocking, with very little attenuation and optical rebounds outside the stop-bands.

The interferential filter may comprise a holographic device comprising a holographic recording. Examples of such holographic recordings are described in "Holographic Imaging" by Stephen A. Benton and V. Michael Bove, Wiley Interscience, 2008. Such holographic recordings are produced by using a photo-sensitive material, on which interference between two coherent laser beams is reproduced. The coherent laser beams need be properly shaped and each propagates in a chosen direction. The set-up parameters, such as vergence, shape and relative intensity of each beam, are controlled during the recording step. The exposure and processing of the photo-sensitive material are monitored to obtain the needed performances so that target band of wavelengths to be inhibited can be properly defined and that the centring of the band on a given wavelength may be ensured. The photo-sensitive material is generally a photopolymer which is coated on a flat or on a curved surface, or casted between two curved surfaces, one of which may be removed after the recording stage. The photo-sensitive material may be thick, for example shaped as an optical lens, e.g. ophthalmic lens, which after recording and fixing presents a very small periodic index modulation depending on interference designed by the set-up. The periodic index modulation generates the desired filter that may be a band-stop type.

The interferential filter may further comprise a photonic bandgap material, such as cholesteric liquid crystal. The photonic bandgap material can be arranged according to one, two or three dimensions. The cholesteric liquid crystal can be electrically activated by applying an electrical field that modulates the orientation of liquid crystals and thus their optical reflective properties.

The interferential filter generally comprises a multilayer dielectric stack of alternating layers of one material having high refractive index of 1.9 to 2.6, and one material having low refractive index of 1.2 to 1.8, each layer being 5 nm to 500 nm, and the total thickness of the multilayer dielectric stack being 500 nm up to 10 µm. Each layer may be deposited by sputtering, vacuum evaporation, physical vapour deposition or chemical vapour deposition. The materials are inorganic or hybrid organic-inorganic materials.

The material having high refractive index may be selected from the group consisting of zirconia (ZrO₂), titanium dioxide (TiO₂), alumina (Al₂O₃), tantalum pentoxide (Ta₂O₅), neodymium oxide (Nd₂O₅), praseodymium oxide (Pr₂O₃), hafnium oxide (HfO₂), zinc sulphide (ZnS), yttrium oxide (Y₂O₃), niobium pentoxide (Nb₂OP), and any mixtures thereof.

The material having low refractive index may be selected from the group consisting of silica (SiO₂), aluminium oxide (Al₂O₃), magnesium oxide (MgO), and any mixtures thereof (particularly a mixture of SiO₂ and Al₂O₃), magnesium fluoride (MgF₂).

In a first exemplary embodiment, the interferential filter is composed of a stack of alternating layers of ZrO₂ and SiO₂ (50 layers each), having a total thickness of about 3800 nm for obtaining a longpass filter transmitting wavelengths over 473 nm (more than 99 %) and reflecting wavelengths below 473 nm (98 %) (FIG. 9). The cut-on wavelength may be shifted towards blue or red colours by adjusting the layer thickness and number, especially if it is desired to balance the blue light blocking efficiency with the image quality. This longpass filter is preferably applied on the image source **21.**

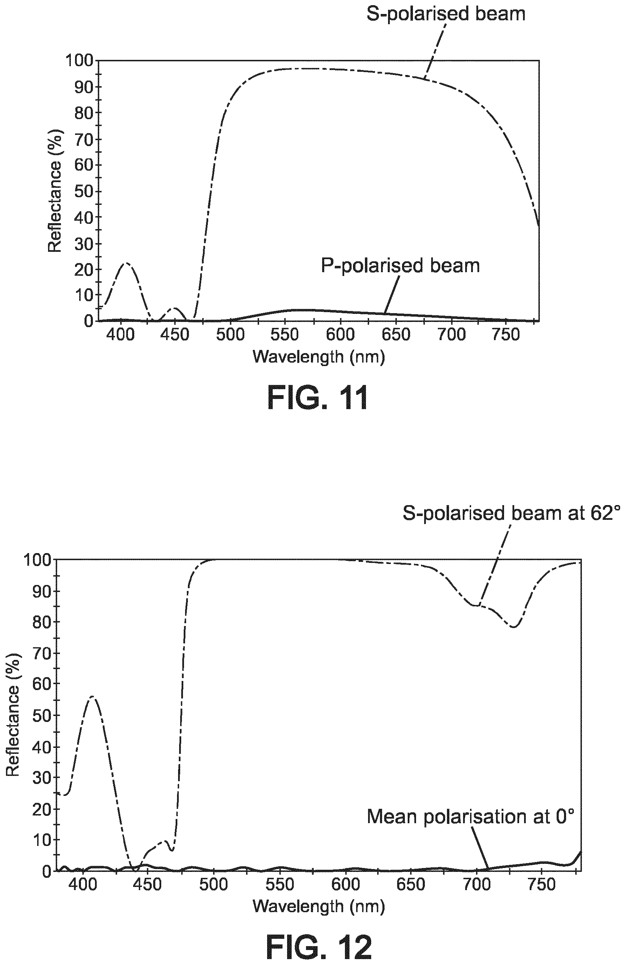

In a second exemplary embodiment, the interferential filter is combined to the exemplified polarising beam splitter layer **32** described above, by modifying the composition of the polarising beam splitter **32.** The corresponding modification made to the polarising beam splitter **32** leads to an increase in the total thickness to about 1365 nm, each layer being adjusted to be 10 nm to 190 nm thick. The resulting polarising beam splitter reflects on average of less than 10% of blue light below 470 nm into the imager (FIG. 11). In other words, over 90% of the blue light is filtered out of the HMD. Such function can be further improved with more modification including layer number, layer thickness, total thickness and material selection.

In a third exemplary embodiment, the interferential filter is composed of a stack of alternating layers of ZrO₂ and SiO₂ (25 layers each), having a total thickness of about 3286 nm. This exemplified interferential filter may be applied to an insulation layer **34** to obtain a filter function for the guided light at high incidence angles: at incidence angles of more than 62°, on average less than 10% of S-polarised light between 425 nm to 470 nm are reflected into the imager **3,** consequently on average over 90% of undesired blue light is filtered by transmission through the insulation layer **34** (FIG. 12). At the same time, over 99% of the visible light from the environment of the wearer (light coming at normal incidence) is transmitted through the insulation layer **34** to the wearer's eye (FIG. 12).

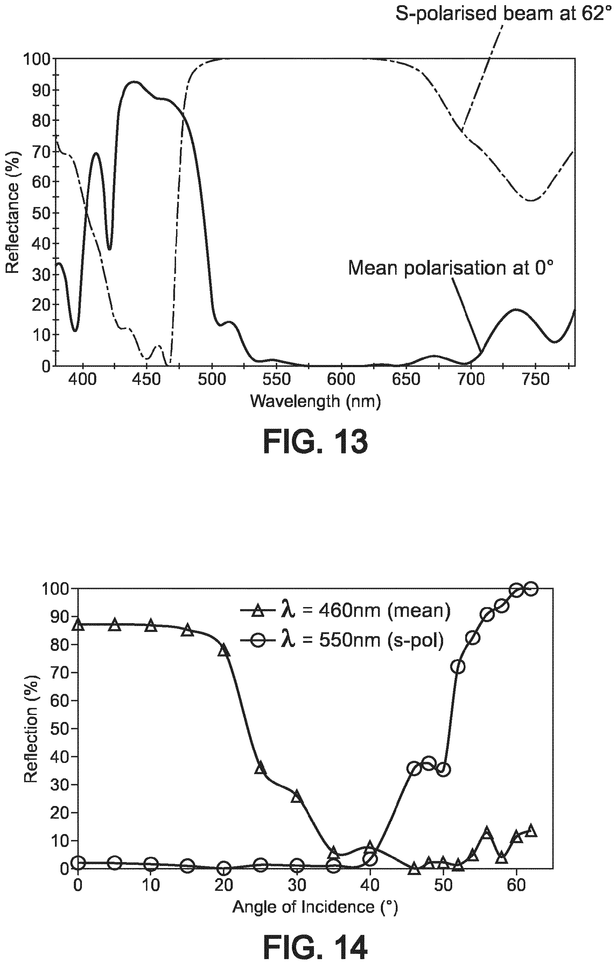

In a fourth exemplary embodiment, an insulation layer **34** is modified to include an interferential filter. The insulation layer **34** including the interferential filter is composed of a stack of alternating layers of ZrO₂ and SiO₂ (25 layers each), having a total thickness of about 2921 nm. Thus, the insulation layer **34** comprises both a filter function for the guided light at high incidence angles and a filter function for filtering undesired wavelengths of light coming from the wearer's environment (at normal incidence). The undesired wavelengths are blue light wavelengths, thus the interferential filter has a blue light blocking function (FIG. 13). Thus, at normal incidence, an average of over 85% of the blue light from the environment is blocked by reflection back to the environment (FIG. 13). At high incidence angle, the blue light from the image source **21** is transmitted out through the imager **3.** FIG. 14 shows the variation of reflectance as a function of the incidence angle for two wavelengths: 460 nm (mean polarisation) and 550 nm (S-polarised beam). The curve corresponding to the 460 nm wavelength demonstrates the blue light-blocking function of the insulation layer 34 to which the interferential filter is applied. The curve corresponding to the 550 nm wavelength demonstrates the optical insulating function.

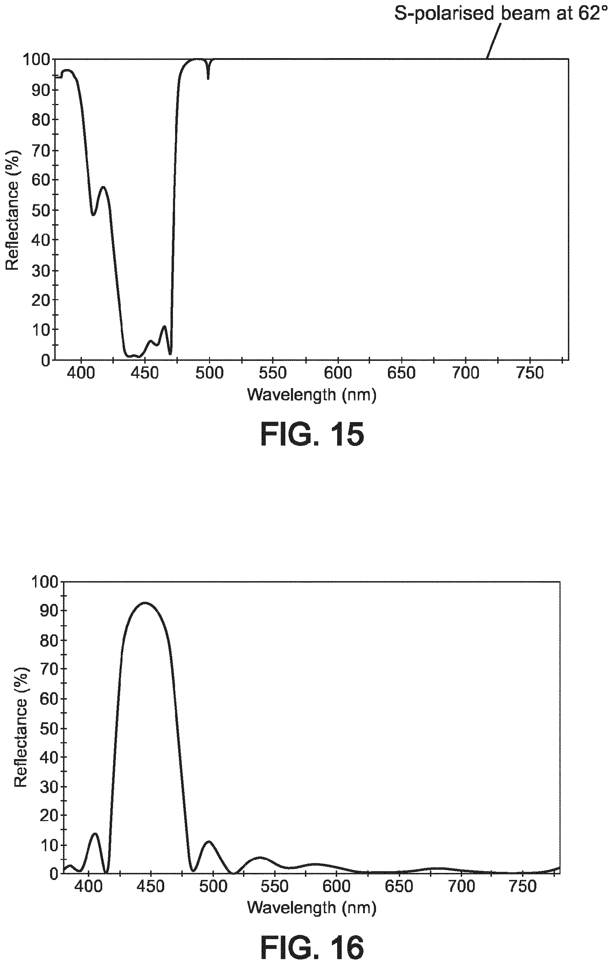

In a fifth exemplary embodiment, an extraction surface **33** is modified to incorporate an interferential filter. This extraction surface **33** incorporating the interferential filter is composed of a stack of alternating layers of ZrO₂ and SiO₂ (19 layers each), having a total thickness of about 5191 nm. Thus, the extraction surface **33** comprises a filter function in which undesired wavelengths are transmitted out of the light guide rather than being reflected towards the wearer's eye. At high incidence angle of 62°, for S-polarised light transmitted into the imager **3,** an average of less than 10% of blue light between 425 nm to 470 nm are reflected inside the imager **3;** thus, over 90% of the undesired blue light is filtered out by transmission through the extraction surface **33** (FIG. 15).

In a sixth exemplary embodiment, the interferential filter is composed of a stack of alternating layers of ZrO₂ and SiO₂ (16 layers each), having a total thickness of about 1670 nm to obtain a band pass filter. This exemplified interferential filter may be applied to the rear face of the ophthalmic lens **4** or on the back face of the light guide **31** if there is no ophthalmic lens between the extraction surface **33** and the wearer's eye. This results in the undesired blue light between 425 nm to 470 nm to be blocked by reflection back into the imager or the ophthalmic lens. An average of 85% of undesired blue light can be blocked and reflected back (FIG. 16). The blocking functionality can be further improved with modification to the layer number, layer thickness, total thickness and selection of materials.

The light filter is an absorptive filter. The absorptive filter may comprise at least a chemical compound which is able to absorb at least part of wavelengths. As example and without any limitation, such chemical compound may be selected from dye, pigment, absorber (like UV absorber), optical brighter and combination thereof.

According to the embodiments under consideration, the absorptive filter may be an additional layer and/or incorporated in a functional layer of the ophthalmic lens and/or dispersed in the ophthalmic lens material and/or in an adhesive material such as the adhesive material placed between the light guide **31** and the ophthalmic lens **4.as** described below.

The absorptive filter can be applied onto an element of the HMD, including a functional layer of the ophthalmic lens, so that it is applied on the image insertion area **43,** by coating a solution or film lamination thanks to various methods, amongst which are wet processing, gaseous processing, film transfer and lamination process, such as spin-coating, dip-coating, spray-coating, vacuum deposition, evaporation, sputtering, chemical vapour deposition.

A functional layer is understood in the scope of this invention as a layer able to improve the optical and/or mechanical properties of the element on which it is applied to. The application of the functional layer onto an element may be carried out by adding at least a functional coating and/or a functional film, on at least one part of a face of the ophthalmic lens. Functional layer may be added on one face of the ophthalmic lens, or on both faces of the ophthalmic lens. If functional layers are applied on each faces, the functional layers may be identical or different. A functional coating and/or a functional film may be added, for example and without any limitation, by at least one process selected from dip-coating, spin-coating, spray-coating, vacuum deposition, sputtering, transfer process or lamination process.

The functional layer may additionally comprise at least one dye and/or pigment absorbing undesired wavelengths, for example within a range of 280 nm to 380 nm for filtering UV, within a range of 380 nm to 500 nm for filtering blue light, within a range of 415 nm to 455 nm, for filtering noxious blue light, and transmitting at least 85 % of wavelengths from 500 nm to 780 nm.

Non-limiting examples of a functional layer are an impact-resistant/adhesion primer layer, an abrasion-resistant/scratch-resistant layer, an antireflective layer, an antistatic layer, an anti-soiling layer, an antifogging layer, a self-healing layer, a polarisation layer, a tint layer, a photochromic layer and a stack made of two or more of these layers such as a stack with an impact-resistant/adhesion primer layer coated with an abrasion/scratch-resistant layer. An impact-resistant/adhesion primer layer means any layer that improves the impact resistance of a layer and/or the adhesion thereof on another layer of the finished product. Examples of such a layer are described in WO 2007/088312. When it comprises a dye and/or pigment, the dye and/or pigment may be dissolved into a water based primer solution, or an organic solvent based primer solution, preferably in a suitable concentration so that the cured impact-resistant/adhesion primer layer comprises 0.01 wt.% to 5 wt.% of such dye and/or pigment. Preferable still, the impact-resistant/adhesion primer layer is 0.1 µm to 3 µm thick after complete curing. Curing is advantageously carried out at room temperature and in contact with air, or at a temperature between 50°C and 120°C for 5 min to 30 min. This impact-resistant/adhesion primer layer is for example placed between the light guide **31** and the ophthalmic lens **4.**

Abrasion/scratch-resistant layers are generally hard layers based on poly(methacrylate)acrylates, polyethers resulting from epoxy homopolymerization, polysiloxanes or combinations thereof. When it comprises a dye and/or pigment, the dye and/or pigment may be dissolved or dispersed into a water/alcohol cosolvent based hard coat solution as mentioned in US5619288, or solvent based hart coat solution as described in EP0614957 (Example 3), preferably in a suitable concentration so that the cured abrasion/scratch-resistant layer comprises 0.01 wt.% to 1 wt.% of such dye and/or pigment. Preferable still, the abrasion/scratch-resistant layer is 1 µm to 10 µm thick after complete curing. Curing is advantageously carried out by UV photo polymerization or with a pre-curing step at 50°C to 100°C followed by a post-curing step at 100°C to 135°C for 30 min to 3 hours.

An antireflective layer improves the reflection properties of the finished optical article by reducing light reflection at the article-air interface over a relatively large range within the visible spectrum. The antireflective layer generally comprises a monolayer of dielectric or sol-gel material or a multilayered stack composed of dielectric or sol-gel materials.

The at least one such dye and/or pigment of the absorptive filter may be dispersed within a thermoplastic or thermosetting polymer as defined above. In such case, the dye and/or pigment concentration is preferably 3 ppm to 1000 ppm in the thermoplastic or thermosetting polymer. The dye and/or pigment may be added to the monomers of the polymer before cross-linking process and then imprisoned within the polymer during cross-linking process.

In one particular example, the thermoplastic or thermosetting polymer comprising the dye and/or pigment is an additional layer applied on one element of the HMD.

In another particular example, a bulk of the ophthalmic lens includes at least one dye and/or pigment absorbing non-desired wavelengths, for example within a range of 280 nm to 380 nm for filtering UV, within a range of 380 nm to 500 nm for filtering blue light, within a range of 400 nm to 455 nm, preferably 415 nm to 455 nm, for filtering noxious blue light, and transmitting at least 85 % of wavelengths from 500 nm to 780 nm. The bulk of the ophthalmic lens **4** is understood in the scope of the invention as designating an uncoated substrate, generally with two main faces corresponding in the finished ophthalmic lens to the front and rear faces thereof. The bulk is particularly made of an optical transparent material, generally chosen from transparent materials of ophthalmic grade used in the ophthalmic industry, and formed to the shape of an optical article, e.g. an ophthalmic lens to be mounted in the HMD. The optically transparent material may be a mineral or organic glass. Examples of organic glasses are those made of thermoplastic or thermosetting resin.

If the transparent material is an organic glass made of thermoplastic, the thermoplastic may be selected from the group consisting of polyamides, polyimides, polysulfones, polycarbonates, polyethylene terephthalate, poly(methyl(meth)acrylate), cellulose triacetate, and copolymers thereof.

If the transparent material is an organic glass made of thermosetting resin, the thermosetting resin may be selected from the group consisting of cycloolefin copolymers, homopolymers and copolymers of allyl carbonates of linear or branched aliphatic or aromatic polyols, homopolymers and copolymers of (meth)acrylic acid and esters thereof, homopolymers and copolymers of thio(meth)acrylic acid and esters thereof, homopolymers and copolymers of allyl esters, homopolymers and copolymers of urethane and thiourethane, homopolymers and copolymers of epoxy, homopolymers and copolymers of sulphide, homopolymers and copolymers of disulphide, homopolymers and copolymers of episulfide, and combinations thereof.

In another particular example, the absorptive filter is a film 10 µm to 300 µm thick of thermoplastic in which the dye and/or pigment is homogeneously dispersed, preferably in concentration ranging from 3 ppm to 500 ppm. The film can then be glued by lamination to at least one element of the HMD lying in the display light path so that it is applied on the image insertion area **43.**

In one variant, the absorptive filter is applied within an interferential filter as described above, and forms one layer of the interferential filter, for example a low index layer with a resulting interferential function equivalent that of SiO₂ layer, comprising at least one dye and/or pigment in a concentration between 0.01 wt.% to 10 wt.%, preferably with a thickness of 10 nm to 100 nm. The application method is generally the same as that of the other layers of the interferential filter.

In another variant, the absorptive filter is applied between the impact-resistant/adhesion primer layer and the abrasion/scratch-resistant layer. In which case, the dye and/or pigment is dissolved or dispersed into a monomer or polymer solution, such as polyvinyl alcohol (or any other soluble and transparent polymer and compatible with the dye and/or pigment). The concentration of the dye and/or pigment in the monomer or polymer solution is adapted so that the cured absorptive filter comprises 0.01 wt.% to 10 wt.% dye and/or pigment. The absorptive filter can be pre-cured at room temperature and in contact with air, or at a temperature between 50°C and 120°C. The thickness of the absorptive filter is preferably 0.1 µm to 10 µm. The dye and/or pigment can also be deposited by vacuum deposition.

The dye and/or pigment of the absorptive filter may include at least one component chosen from the group consisting of: Auramine O; Coumarin 6; Coumarin 343; Coumarin 314; Nitrobenzoxadiazole; Lucifer yellow CH; Perylene; 9,10 Bis(phenylethynyl)anthracene (BPEA); Proflavin; 4-(Dicyanomethylene)-2-methyl-6-(4-dimethylaminostyryl)-4H-pyran; 2-[4-(Dimethylamino)styryl]-1-methypyridinium iodide; Resorufin methyl ether; Acridine; Lutein; Zeaxanthin; and mixtures thereof.

Alternatively or additionally, the dye and/or pigment comprises one or more porphyrins, porphyrin complexes or derivatives thereof. For example, the dye and/or pigment comprises one compound chosen from the group consisting of: Chlorophyll B; 5,10,15,20-Tetrakis(4-sulfonatophenyl) porphyrin sodium salt complexes; 5,10,15,20-Tetrakis(N-alkyl-4-pyridyl) porphyrin complexes; 5,10,15,20-Tetrakis(N-alkyl-3-pyridyl) porphyrin complexes; 5,10,15,20-Tetrakis(N-alkyl-2-pyridyl) porphyrin complexes; and mixtures thereof. The preferred compounds are chosen from the group consisting of: Chlorophyll B; 5,10,15,20-Tetrakis(4-sulfonatophenyl) porphyrin sodium salt complexes; 5,10,15,20-Tetrakis(N-C₁-4alkyl-4-pyridyl) porphyrin complexes; 5,10,15,20-Tetrakis(N-C₁₋₄alkyl-3-pyridyl) porphyrin complexes; 5,10,15,20-Tetrakis(N-C1-4alkyl-2-pyridyl) porphyrin complexes; and mixtures thereof. The complexes are advantageously metal complexes, the metal being chosen from the group consisting of: Cr(III), Ag(II), In(III), Mn(III), Sn(IV), Fe (III), Co (II), Mg(II) and Zn(II). In this regards, the dye and/or pigment comprise one or more porphyrin complexes chosen from the group consisting of: Magnesium meso-Tetrakis(4-sulfonatophenyl) porphyrin tetrasodium salt; Magnesium Octaethylporphyrin; Magnesium Tetramesitylporphyrin; Magnsesium Octaethylporphyrin; Magnesium Tetrakis-(2,6-dichlorophenyl) porphyrin; Magnesium Tetrakis(o-aminophenyl) porphyrin; Magnesium Tetramesitylporphyrin; Magnesium Tetraphenylporphyrin; Zinc octaethylporphyrin; Zinc Tetramesitylporphyrin; Zinc tetraphenylporphyrin; and Zinc dipronated-tetraphenylporphyrin.

The dye and/or pigment may advantageously be selected from the following compound families for filtering blue light: perylene family, coumarin family, porphyrin family, acridine family and indolenin (which is a synonym for 3H-indole) family. The dye and/or pigment for filtering blue light has a narrow absorption band within the range of 400 nm to 460 nm, preferably 415 nm to 455 nm. Narrow absorption band means a bandwidth of at most 30 nm around a central wavelength, preferably at most 15 nm. Advantageously, the dye and/or pigment for filtering blue light has a narrow absorption band centred at around 435 nm. The preferred family is perylene family. The compounds of these family exhibit ideal spectral characteristics and interesting injection processability. Indeed, such compounds are selective yellow dyes, which do not absorb, or at least very little, in visible spectrum regions outside the range of 400 nm to 460 nm.

The dye and/or pigment may be combined with additives such as optical brighteners. An optical brightener (also called fluorescent whitening agent (FWA), optical brightening agents (OBA) or fluorescent brightening agents (FBA)) may be used as a colour balancing means, i.e., to minimise, and preferably eliminate, the shift in colour perception that results from filtering part of the light, e.g. blue-blocking by a blue blocking dye, since the light emitted by the optical brightener can compensate for the diminished light of the material treated by the dye and restore the original colourless appearance.

The optical brightener may be chosen from the group consisting of: stilbene, carbostyril; coumarin; 1,3-diphenyl-2-pyrazoline; naphthalimide; combined heteroaromatics; benzoxazole; and derivatives thereof.

Examples of combined heteroaromatics are pyrenyl-triazines or other combinations of heterocyclic compounds such as thiazoles, pyrazoles, oxadiazoles, fused polyaromatic systems or triazines, directly connected to each other or through a conjugated ring system.

Examples of benzoxazole derivatives are benzoxazole substituted at the 2-position with a conjugated ring system, preferably comprising ethylene, phenylethylene, stilbene, benzoxazole and/or thiophene, and derivatives thereof.

Preferably, the optical brightener comprises at least one compound selected from the group consisting of: bis-benzoxazole and derivatives thereof, phenylcoumarin, methylcoumarins and bis-(styryl)biphenyls. These compounds are described in more details in A.G. Oertli, Plastics Additives Handbook, 6th Edition, H. Zweifel, D. Maier, M. Schiller Editors, 2009.

Other additives to which the dye and/or pigment may be combined are UV absorbers, including triazole and triazine derivatives. Examples of triazole derivatives are hydroxyphenyl-benzotriazole, TINUVIN^{®} 1130, TINUVIN^{®} 328, TINUVIN^{®} 384, and TINUVIN^{®} 928 from Ciba Specialty Chemical, Inc. (BASF since 2009). Examples of triazole derivatives are hydroxyphenyl-triazine, TINUVIN^{®} 400 and TINUVIN^{®} 405 from Ciba. The UV absorbers can be incorporated into the bulk lenses, coatings or films by applying BPI^{®} UV 400 Plus^{™}, BPI^{®} Diamond Dye^{™} (400nm, 400nm XL, 400nm Ultra-Hard) and BPI^{®} UV Only^{™} (400nm, 400nm XL, 400nm Crystal Clear^{™})....

In all cases, the dye and/or pigment, optionally with additives, may be dispersed in an optically transparent polymer, the content of which is 0 wt.% to 99.99 wt.%. When, there is no optically transparent polymer (0 wt.%), the dye and/or pigment, and optionally with additives, is preferably deposited onto a surface of one of the element of the HMD by physical evaporation or sublimation of the dye and/or pigment, or by wet deposition of a solvent based solution followed by an evaporation step to eliminate the solvent. The polymer content may remain substantially significant in the finished layer and representing more than 50 wt.% of the finished layer. The content and nature of the polymer is to be decided according to location of the light filter and the other additional function of the light filter.

The ophthalmic lens 4 as described above may be provided together with the light filter as described above but without other components of the HMD, for example as a kit module or spare part.

The imager 3 as described above may also be provided together with the light filter as described above and without any other components of the HMD, for example as a kit module or spare part.

The optical module **2** as described above may also be provided together with the light filter as described above and without any other components of the HMD, for example as a kit module or spare part.

## Claims

1. An ophthalmic lens (4) configured to be mounted onto a head-mounted display comprising an image source, wherein said ophthalmic lens (4) comprises an image insertion area (43) to be linked to the image source and an imager (3) for guiding light emitted by the image source to a wearer's eye in operation;
**characterized in that** the ophthalmic lens further comprises a light filter comprising at least one absorptive filter including at least a dye and/or pigment absorbing wavelengths within a range of 400 nm to 455 nm, and transmitting at least 85 % of wavelengths from 500 nm to 780 nm;
wherein the imager (3) further comprises a light guide (31) and is encapsulated in the ophthalmic lens (4); and
wherein the image insertion area (43) is a region of the ophthalmic lens configured so that images entering the material thereof reach the light guide (31),
**characterized in that**
the light filter is applied on the image insertion area (43) and configured to filter the light emitted by the image source of the head-mounted display in operation.

2. A head-mounted display (1) comprising:
- an optical module (2) containing an image source (21);
- the ophthalmic lens (4) according to claim 1.

3. The display (1) of claim 2, wherein the light filter filters wavelengths emitted by the image source within a range of 280 nm to 610 nm.

4. The display (1) of claim 2 or claim 3, wherein the imager (3) further comprises at least one of a polarising beam splitter (32) between the image source (21) and the light guide (31), an extraction surface (33) on a portion of the light guide (31) facing the wearer's eye in operation and an insulation layer (34) on the light guide (31), and
wherein the light filter is applied on at least one of the image source (21), the light guide (31), the polarising beam splitter (32), the extraction surface (33), and the insulation layer (34).

5. The display (1) of any claims 2 to 4, wherein the ophthalmic lens (4) comprises a front face (41), a rear face (42), and wherein the light filter is applied on the front face (41) or the rear face (42) of the ophthalmic lens.

6. The display (1) of any claims 2 to 5, wherein the light filter comprises an interferential filter selected from among at least a Bragg mirror based filter, a multilayer dielectric filter, a holographic filter, and a Rugate filter.

7. The display (1) of claim 6, wherein the interferential filter further comprises a photonic bandgap material.

8. The display (1) of claim 6 or claim 7, wherein the interferential filter is one of a Bragg mirror based filter, a multilayer dielectric filter and a Rugate filter and comprises a multilayer dielectric stack of alternating layers of one material having high refractive index of 1.9 to 2.6, and one material having low refractive index of 1.2 to 1.8, each layer being 5 nm to 420 nm, and the total thickness of the multilayer dielectric stack being 1150 nm to 5770 nm.

9. The display (1) of any of claims 2 to 8, wherein the absorptive filter is applied on at least one functional layer, the functional layer being selected from an impact-resistant/adhesion primer layer, an abrasion-resistant/scratch-resistant layer, an antireflective layer, an antistatic layer, an anti-soiling layer, an antifogging layer, a self-healing polarisation layer, a tint layer, a photochromic, and combinations thereof.

10. The display (1) of any of claims 2 to 9, wherein the dye and/or pigment includes at least one component chosen from the group consisting of: Auramine O; Coumarin 6; Coumarin 343; Coumarin 314; Nitrobenzoxadiazole; Lucifer yellow CH; Perylene; 9,10 Bis(phenylethynyl)anthracene (BPEA); Proflavin; 4-(Dicyanomethylene)-2-methyl-6-(4-dimethylaminostyryl)-4H-pyran; 2-[4-(Dimethylamino)styryl]-1-methypyridinium iodide; Resorufin methyl ether; Acridine; Lutein; Zeaxanthin; and mixtures thereof.

11. The display (1) of any of claims 2 to 10, wherein the at least a dye and/or pigment is dispersed in a thermoplastic or thermoset polymer material, and/or dispersed in an ophthalmic lens bulk material and/or in an adhesive material.

## Patentansprüche

1. Ophthalmische Linse (4), gestaltet zur Montage an einem Head-Mounted-Display, das eine Bildquelle umfasst, wobei die ophthalmische Linse (4) einen Bildeinkopplungsbereich (43), der mit der Bildquelle verknüpft werden soll, und einen Bildgeber (3) zum Führen von Licht, das von der Bildquelle emittiert wird, zu einem Auge eines Trägers im Betrieb umfasst;
**dadurch gekennzeichnet, dass** die ophthalmische Linse ferner einen Lichtfilter umfasst, der wenigstens einen Absorptionsfilter umfasst, der wenigstens ein(en) Farbstoff und/oder Pigment enthält, der/das Wellenlängen in einem Bereich von 400 nm bis 455 nm absorbiert und wenigstens 85 % der Wellenlängen von 500 nm bis 780 nm durchlässt;
wobei der Bildgeber (3) ferner einen Lichtleiter (31) umfasst und in der ophthalmischen Linse (4) verkapselt ist; und
wobei der Bildeinkopplungsbereich (43) ein Bereich der ophthalmischen Linse ist, der so gestaltet ist, dass in das Material davon eintretende Bilder den Lichtleiter (31) erreichen,
**dadurch gekennzeichnet, dass**
der Lichtfilter auf den Bildeinkopplungsbereich (43) aufgebracht ist und dafür gestaltet ist, das von der Bildquelle des Head-Mounted-Displays im Betrieb emittierte Licht zu filtern.

2. Head-Mounted-Display (1) umfassend:
- ein optisches Modul (2), das eine Bildquelle (21) enthält;
- die ophthalmische Linse (4) gemäß Anspruch 1.

3. Display (1) gemäß Anspruch 2, wobei der Lichtfilter von der Bildquelle emittierte Wellenlängen in einem Bereich von 280 nm bis 610 nm filtert.

4. Display (1) gemäß Anspruch 2 oder Anspruch 3, wobei der Bildgeber (3) ferner wenigstens eines von einem polarisierenden Strahlteiler (32) zwischen der Bildquelle (21) und dem Lichtleiter (31), einer Auskopplungsfläche (33) an einem Teil des Lichtleiters (31), der im Betrieb zu dem Auge des Trägers zeigt, und einer Isolationsschicht (34) auf dem Lichtleiter (31) umfasst, und
wobei der Lichtfilter auf wenigstens eines von der Bildquelle (21), dem Lichtleiter (31), dem polarisierenden Strahlteiler (32), der Auskopplungsfläche (33) und der Isolationsschicht (34) aufgebracht ist.

5. Display (1) gemäß einem der Ansprüche 2 bis 4, wobei die ophthalmische Linse (4) eine Vorderseite (41), eine Rückseite (42) umfasst und wobei der Lichtfilter auf die Vorderseite (41) oder die Rückseite (42) der ophthalmischen Linse aufgebracht ist.

6. Display (1) gemäß einem der Ansprüche 2 bis 5, wobei der Lichtfilter einen Interferenzfilter ausgewählt aus wenigstens einem Filter auf Braggspiegel-Basis, einem mehrschichtigen dielektrischen Filter, einem holographischen Filter und einem Rugate-Filter umfasst.

7. Display (1) gemäß Anspruch 6, wobei der Interferenzfilter ferner ein photonisches Bandlückenmaterial umfasst.

8. Display (1) gemäß Anspruch 6 oder Anspruch 7, wobei der Interferenzfilter eines von einem Filter auf Braggspiegel-Basis, einem mehrschichtigen dielektrischen Filter und einem Rugate-Filter ist und einen mehrschichtigen dielektrischen Stapel von abwechselnden Schichten von einem Material mit hohem Brechungsindex von 1,9 bis 2,6 und einem Material mit niedrigem Brechungsindex von 1,2 bis 1,8 umfasst, wobei jede Schicht 5 nm bis 420 nm ist und die Gesamtdicke des mehrschichtigen dielektrischen Stapels 1150 nm bis 5770 nm beträgt.

9. Display (1) gemäß einem der Ansprüche 2 bis 8, wobei der Absorptionsfilter auf wenigstens eine Funktionsschicht aufgebracht ist, wobei die Funktionsschicht ausgewählt ist aus einer schlagfesten/haftenden Grundierungsschicht, einer abrasionsfesten/kratzfesten Schicht, einer Antireflexschicht, einer antistatischen Schicht, einer schmutzabweisenden Schicht, einer Antibeschlagschicht, einer selbstheilenden Polarisationsschicht, einer Tönungsschicht, einer photochromen und Kombinationen davon.

10. Display (1) gemäß einem der Ansprüche 2 bis 9, wobei der Farbstoff und/oder das Pigment wenigstens eine Komponente ausgewählt aus der Gruppe bestehend aus: Auramin O; Cumarin 6; Cumarin 343; Cumarin 314; Nitrobenzoxadiazol; Lucifer-Gelb CH; Perylen; 9,10-Bis(phenylethinyl)anthracen (BPEA) ; Proflavin; 4-(Dicyanomethylen)-2-methyl-6-(4-dimethylaminostyryl)-4H-pyran; 2-[4-(Dimethylamino)styryl]-1-methylpyridiniumiodid; Resorufinmethylether; Acridin; Lutein; Zeaxanthin; und Gemischen davon enthält.

11. Display (1) gemäß einem der Ansprüche 2 bis 10, wobei der/das wenigstens eine Farbstoff und/oder Pigment in einem thermoplastischen oder wärmehärtenden Polymermaterial dispergiert ist und/oder in einem Grundmaterial für ophthalmische Linsen und/oder in einem Klebstoffmaterial dispergiert ist.

## Revendications

1. Lentille ophtalmique (4) configurée pour être montée sur un afficheur facial comprenant une source d'images, dans laquelle ladite lentille ophtalmique (4) comprend une zone d'insertion d'images (43) devant être reliée à la source d'images et un imageur (3) servant à guider la lumière émise par la source d'images jusqu'à un œil d'un porteur en fonctionnement ;
**caractérisée en ce que** la lentille ophtalmique comprend en outre un filtre de lumière comprenant au moins un filtre absorbant comportant au moins un colorant et/ou pigment absorbant des longueurs d'onde à l'intérieur d'une gamme de 400 nm à 455 nm, et transmettant au moins 85 % de longueurs d'onde de 500 nm à 780 nm ;
dans laquelle l'imageur (3) comprend en outre un guide de lumière (31) et est encapsulé dans la lentille ophtalmique (4) ; et
dans laquelle la zone d'insertion d'images (43) est une région de la lentille ophtalmique configurée de telle sorte que des images pénétrant dans le matériau de celle-ci atteignent le guide de lumière (31),
**caractérisée en ce que**
le filtre de lumière et appliqué sur la zone d'insertion d'images (43) et configuré pour filtrer la lumière émise par la source d'images de l'afficheur facial en fonctionnement.

2. Afficheur facial (1) comprenant :
- un module optique (2) contenant une source d'images (21) ;
- la lentille ophtalmique (4) selon la revendication 1.

3. Afficheur (1) selon la revendication 2, dans lequel le filtre de lumière filtre des longueurs d'onde émises par la source d'images à l'intérieur d'une gamme de 280 nm à 610 nm.

4. Afficheur (1) selon la revendication 2 ou la revendication 3, dans lequel l'imageur (3) comprend en outre au moins un élément parmi un séparateur de faisceau polarisant (32) entre la source d'images (21) et le guide de lumière (31), une surface d'extraction (33) sur une partie du guide de lumière (31) faisant face à l'œil du porteur en fonctionnement, et une couche d'isolation (34) sur le guide de lumière (31), et
dans lequel le filtre de lumière est appliqué sur au moins un élément parmi la source d'images (21), le guide de lumière (31), le séparateur de faisceau polarisant (32), la surface d'extraction (33), et la couche d'isolation (34).

5. Afficheur (1) selon l'une quelconque des revendications 2 à 4, dans lequel la lentille ophtalmique (4) comprend une face avant (41), une face arrière (42), et dans lequel le filtre de lumière est appliqué sur la face avant (41) ou la face arrière (42) de la lentille ophtalmique.

6. Afficheur (1) selon l'une quelconque des revendications 2 à 5, dans lequel le filtre de lumière comprend un filtre interférentiel choisi parmi au moins un filtre à base de miroirs de Bragg, un filtre diélectrique multicouche, un filtre holographique, et un filtre à gradient d'indice.

7. Afficheur (1) selon la revendication 6, dans lequel le filtre interférentiel comprend en outre un matériau à bande interdite photonique.

8. Afficheur (1) selon la revendication 6 ou la revendication 7, dans lequel le filtre interférentiel est soit un filtre à base de miroirs de Bragg, soit un filtre diélectrique multicouche, soit un filtre à gradient d'indice, et comprend un empilement diélectrique multicouche de couches alternées d'un matériau ayant un fort indice de réfraction de 1,9 à 2,6, et d'un matériau ayant un faible indice de réfraction de 1,2 à 1,8, chaque couche faisant 5 nm à 420 nm, et l'épaisseur totale de l'empilement diélectrique multicouche étant de 1150 nm à 5770 nm.

9. Afficheur (1) selon l'une quelconque des revendications 2 à 8, dans lequel le filtre absorbant est appliqué sur au moins une couche fonctionnelle, la couche fonctionnelle étant choisie parmi une couche primaire résistante aux chocs/d'adhérence, une couche résistante à l'abrasion/aux rayures, une couche antireflet, une couche antistatique, une couche antisalissure, une couche antibuée, une couche de polarisation autocicatrisante, une couche de teinte, un photochrome, et les combinaisons de ceux-ci.

10. Afficheur (1) selon l'une quelconque des revendications 2 à 9, dans lequel le colorant et/ou pigment comporte au moins un composant choisi dans le groupe constitué par : l'auramine O ; la coumarine 6 ; la coumarine 343 ; la coumarine 314 ; le nitrobenzoxadiazole ; le jaune Lucifer CH ; le pérylène ; le 9,10-bis(phényléthynyl)anthracène (BPEA) ; la proflavine ; le 4-(dicyanométhylène)-2-méthyl-6-(4-diméthylaminostyryl)-4H-pyrane ; l'iodure de 2-[4-(diméthylamino)styryl]-1-méthylpyridinium, l'éther méthylique de résorufine ; l'acridine ; la lutéine ; la zéaxanthine ; et les mélanges de ceux-ci.

11. Afficheur (1) selon l'une quelconque des revendications 2 à 10, dans lequel l'au moins un colorant et/ou pigment est dispersé dans un matériau polymère thermoplastique ou thermodurci, et/ou dispersé dans un matériau constituant la masse de la lentille ophtalmique et/ou dans un matériau adhésif.
